# EUROPÄISCHE PATENTSCHRIFT

(11) **EP 1 279 804 B1**
(45) Veröffentlichungstag und Bekanntmachung des Hinweises auf die Patenterteilung: **23.03.2005**
(21) Anmeldenummer: 02014757.5
(22) Anmeldetag: 04.07.2002
(51) Int. Cl.: F02B 27/02

(54) **Luftansaugkanalsystem für Brennkraftmaschinen**
Air intake system for internal combustion engines
Système d'admission d'air pour moteurs à combustion interne

(30) Priorität: 28.07.2001 DE 10137077
(43) Veröffentlichungstag der Anmeldung: 29.01.2003
(73) Patentinhaber: Pierburg GmbH, 41460 Neuss (DE)
(72) Erfinder: Hüsges, Hans-Jürgen, 47877 Willich (DE)
(74) Vertreter: von Kirschbaum, Alexander, Dipl.-Ing.

(56) Entgegenhaltungen:
- EP-A- 0 848 145
- DE-A- 10 016 027
- DE-A- 19 756 332

## Beschreibung

Die Erfindung betrifft ein Luftansaugkanalsystem für Brennkraftmaschinen, insbesondere für V-Motoren.

Aus DE 197 56 332 ist ein Luftansaugkanalsystem bekannt, bei dem die Länge mehrerer jeweils mit einem Zylinder einer Brennkraftmaschine verbindbarer Luftansaugkanäle stufenlos variiert werden kann. Hierzu sind die spiralförmig ausgebildeten Ansaugkanäle nebeneinander angeordnet. Jeder spiralförmige Luftansaugkanal weist eine mit einem zentralen Innenbereich des Luftansaugsystems verbundene Einlaßöffnung auf, durch die Luft in den spiralförmigen Kanal eintritt und nach Durchströmen des spiralförmigen Kanals zu dem entsprechenden Zylinder geleitet wird. Innerhalb des zentralen Bereichs ist ein rohrförmiges Kanalteil angeordnet, durch das die Innenwand des spiralförmigen Kanals gebildet ist und der die Lufteinlaßöffnung aufweist. Der rohrförmige Kanalteil ist schwenkbar angeordnet, so dass die Lage der Lufteintrittsöffnung variiert werden kann. Durch Schwenken des rohrförmigen Kanalteils kann somit die Länge des Luftansaugkanals, d.h. die von der Luft zu durchströmende Strecke zwischen Lufteintrittsöffnung und Luftaustrittsöffnung, stufenlos variiert werden.

Die einzelnen, die Ansaugkanäle bildenden Kanalteile sind benachbart zueinander bzw. stapelförmig angeordnet, wobei die ausgebildeten Luftansaugkanäle abwechselnd mit der einen oder anderen Reihe der Zylinder des V-Motors verbunden sind. Zum Schwenken der inneren schwenkbaren Kanalteile sind diese mit einer Schwenkachse verbunden. Die jeweils mit einer Seite des V-Motors verbundenen Luftansaugkanäle weisen die gleiche Länge auf und werden somit gemeinsam über eine Schwenkachse betätigt. Das Luftansaugkanalsystem weist somit zwei Schwenkachsen auf, die jeweils mit den schwenkbaren Kanalteilen für die eine bzw. die andere Zylinderreihe des V-Motors verbunden sind. Um möglichst gleich lange Luftansaugkanäle zu den einzelnen Zylindern realisieren zu können, sind in dem Luftansaugkanalsystem die einzelnen Luftansaugkanäle der einen bzw. der anderen Zylinderreihe abwechselnd angeordnet. Die beiden Schwenkachsen sind somit nur mit jedem zweiten schwenkbaren Kanalteil des Luftansaugsystems verbunden und durch das jeweils andere Kanalteil nur hindurchgeführt.

Die Lagerung der Schwenkachsen erfolgt beispielsweise in einzelnen Gleitlagerhülsen. Die beispielsweise aus gehärtetem Stahl bestehenden Gleitlagerhülsen sind in einem Gehäuse des Luftansaugkanalsystems oder in den feststehenden Kanalteilen angeordnet. Das Vorsehen einzelner Lagerhülsen für die beiden Schwenkachsen weist den Nachteil auf, dass auf Grund einer Mindestdicke der Lagerhülsen und des sich hieraus ergebenden Mindestabstands der Schwenkachsen der erforderliche Bauraum relativ groß ist.

Eine weitere Möglichkeit besteht darin, die üblicherweise aus Metall bestehenden Schwenkachsen direkt in den Kanalteilen aus Kunststoff zu lagern. Hierbei tritt jedoch ein relativ hoher Verschleiß auf, so dass die geforderte durchschnittliche Lebensdauer nicht zuverlässig erreicht werden kann.

Aufgabe der Erfindung ist es, den erforderlichen Bauraum für Luftansaugkanalsysteme zu verringern.

Die Lösung der Aufgabe erfolgt erfindungsgemäß durch die Merkmale des Patentanspruchs 1.

Eine Verringerung des erforderlichen Bauraums des Luftansaugkanalsystems kann erfindungsgemäß durch Anordnen der beiden Schwenkachsen in geringem Abstand zueinander erzielt werden. Da eine Lagerung in Kunststoff auf Grund des auftretenden Verschleißes nachteilig ist, ist ein gemeinsames, einstückiges Lagerteil vorgesehen, das zwei Schwenkachsenlager für je eine der beiden Schwenkachsen umfasst. Vorzugsweise handelt es sich um zwei Gleitlagerhülsen, die einander überschneiden, so dass das Lagerteil die Form einer 8 aufweist. Eine zwischen den beiden Schwenkachsenlagern angeordnete Zwischenwand dient als Hülsenwand, die erfindungsgemäß dünner als die doppelte Stärke der einzelnen bzw. außen liegenden Hülsenwände ausgebildet ist, für beide Lagerhülsen. Im Unterschied zu zwei nebeneinander angeordneten identischen Lagerhülsen können die beiden zylindrischen Hülsen in den Öffnungen des erfindungsgemäßen Lagerteils erheblich näher nebeneinander angeordnet werden, so dass der erforderliche Bauraum verringert ist.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht eines Luftansaugkanalsystems für einen 8-Zylinder-V-Motor und
- Fig. 2: eine schematische Draufsicht des erfindungsgemäßen Lagerteils.

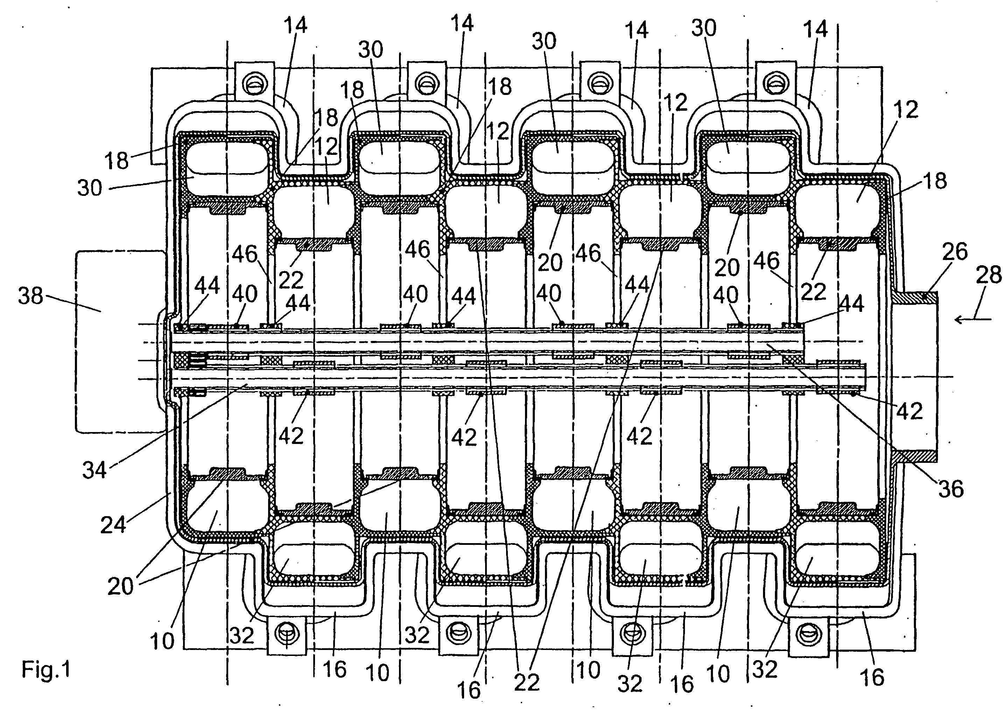

Das Luftansaugkanalsystem weist acht spiralförmig verlaufende Luftansaugkanäle 10,12 auf. Hierbei sind die Ansaugkanäle 10 über Ansätze 14 mit der einen Seite des V-Motors und die Ansaugkanäle 12 über Ansätze 16 mit der anderen Seite des V-Motors verbunden. Die einzelnen Ansaugkanäle sind jeweils durch ein erstes, im dargestellten Ausführungsbeispiel feststehendes Kanalteil 18 und ein zweites, schwenkbares Kanalteil 20,22 gebildet. Mit Ausnahme der beiden in der Figur am linken und rechten Rand vorgesehenen Kanalteile sind sämtliche erste Kanalteile 18 identisch aufgebaut und, wie in Fig. 1 dargestellt, nebeneinander angeordnet bzw. aufeinander gestapelt. Die ersten Kanalteile 18 sind in einem aus zwei Gehäusehälften bestehenden Gehäuse 24 angeordnet. Die schwenkbaren zweiten Kanalteile 20 und 22 sind ebenfalls identisch.

Die den einzelnen Ansaugkanälen 10,12 zuzuführende Luft wird über einen Ansaugstutzen 26 in Richtung eines Pfeils 28 in den inneren Bereich des Luftansaugsystems geleitet. Der innere Bereich ist durch die nebeneinander angeordneten schwenkbaren Kanalteile 20,22, die jeweils im wesentlichen kreiszylinderförmig sind, gebildet. Je nach Ausführungsform sind ggf. zusätzliche Ansaugöffnungen mit den einzelnen Luftansaugkanälen 10,12 verbunden, so dass sowohl durch den zentralen Bereich des Luftansaugkanalsystems als auch durch die zusätzlichen Zuführkanäle Luft in die Luftansaugkanäle 10,12 gelangt. Aus dem zentralen Bereich des Luftansaugkanalsystems gelangt die Luft durch in den schwenkbaren Kanalteilen 20,22 vorgesehene Lufteinlaßöffnungen in die entsprechenden Luftansaugkanäle 10,12. Aus diesen tritt die Luft durch Luftauslaßöffnungen 30 bzw. 32 aus und wird durch nicht dargestellte Kanäle zu den entsprechenden Zylindern geführt.

Zum Variieren der Länge der Luftansaugkanäle 10,12 sind die schwenkbaren Kanalteile 20,22 mit Schwenkachsen 34,36 fest verbunden. Durch Schwenken der Schwenkachsen 34,36 mit Hilfe eines Stellelements 38 werden die Lufteinlaßöffnungen der schwenkbaren Kanalteile 20,22 in ihrer Lage verändert, so dass die Luft aus dem zentralen Bereich an einer anderen Stelle in die spiralförmigen Luftansaugkanäle 10,12 eintritt und somit einen kürzeren oder längeren Weg zurücklegen muß.

Die zweiten Kanalteile 20 sind über Stege mit Halterungen 40 verbunden und bilden ein Verstellelement. Die Halterungen 40 sind mit der Schwenkachse 36 über ein Rohrprofil (Vierkant) verbunden. Die Verbindung zwischen den Halterungen 40 und der Schwenkachse 36 erfolgt zusätzlich über Blattfedern. Die Halterungen 40 sind über Stege mit dem zweiten Kanalteil 20 verbunden. Entsprechend sind die Kanalteile 22 über Stege und Halterungen 42 mit der Schwenkachse 34 verbunden. Die Kanalteile 20 bzw. 22 werden somit stets gemeinsam verschwenkt, so dass die Luftansaugkanäle 10 bzw. 12 je Seite des V-Motors gleich lang sind.

Die Lagerung der beiden Schwenkachsen 34,36 erfolgt erfindungsgemäß durch ein Lagerteil 44, in dem die beiden Achsen gemeinsam gelagert sind. Die Lagerteile 44 sind jeweils in radialen Wänden 46 der feststehenden ersten Kanalteile 18 angeordnet. Die Anzahl der Lager kann hierbei je nach geforderter Genauigkeit und verwendetem Werkstoff variieren. Die Lagerteile 44 bestehen aus gesintertem Stahl, GGG oder sind als Schmiedeteil ausgebildet. Die Lagerteile 44 sind vorzugsweise durch Umspritzen in den Wänden 46 der Kanalteile 18 gehalten.

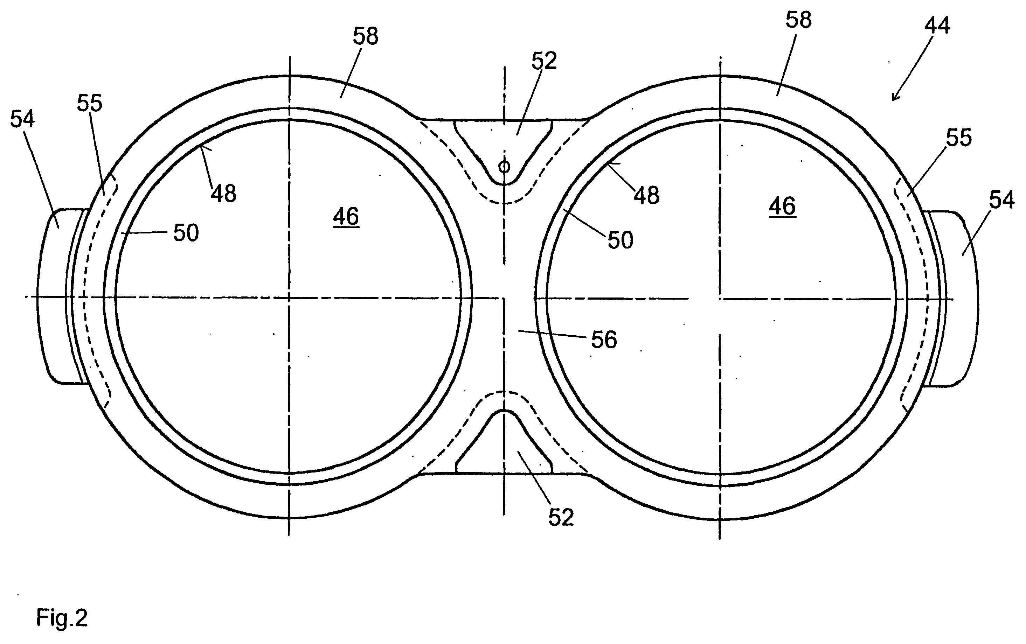

Das Lagerteil 44 (Fig. 2) weist zwei zylindrische Öffnungen 46 auf, so dass die Innenwände 48 zwei zylindrische Lagerhülsen zur Aufnahme der beiden Schwenkachsen 34,36 bilden. Um das Einführen der Schwenkachsen 34,36 in die Öffnungen 46 zu erleichtern, weisen diese eine Fase 50 auf. Zur Versteifung der beiden zu einer 8 verbundenen Hülsen ist in den Einschnürungsbereichen jeweils ein Steg 52 vorgesehen. Ferner sind an den Außenwänden der Hülsen zwei Ansätze 54, die sich nicht über die gesamte Höhe des Lagerteils 44 erstrecken, vorgesehen. Sowohl die Stege 52 als auch die Ansätze 54 werden beim Umspritzen des Lagerteils 44 von Kunststoff umspritzt. Anstatt oder zusätzlich zu den Ansätzen 54 können auch Hinterschneidungen bzw. Schlitze 55 vorgesehen sein. Hierdurch sind die Lagerteile 44 fest in den Wänden 46 der feststehenden Kanalteile 18 gehalten. Das Vorsehen eines gemeinsamen erfindungsgemäßen Lagerteils 44 für die beiden Schwenkachsen weist ferner den Vorteil auf, dass der Abstand der beiden Schwenkachsen eindeutig definiert ist.

Das im Wesentlichen die Form einer 8 aufweisende Lagerteil 44 weist eine gemeinsame Hülsenwand 56 auf. Die gemeinsame Hülsenwand 56 ist zwischen den beiden Lagerhülsen 48 angeordnet und dient als Wand für beide Lagerhülsen 48. Die Stärke der gemeinsamen Hülsenwand 56 kann erfindungsgemäß dünner ausgebildet werden als die doppelte Stärke der einzelnen bzw. außen liegenden Hülsenwände 58. Vorzugsweise beträgt die Stärke der gemeinsamen Hülsenwand 56 weniger als das 1,5-fache der einzelnen Hülsenwände 58. Besonders bevorzugt ist eine Stärke der gemeinsamen Hülsenwand 56, die etwa der Stärke der einzelnen Hülsenwand 58 entspricht. Hierdurch kann der Abstand der beiden in den Lagerhülsen 48 gelagerten Schwenkachsen 34,36 minimiert werden.

## Patentansprüche

1. Luftansaugkanalsystem für Brennkraftmaschinen, mit
mehreren jeweils mindestens durch ein erstes und ein zweites Kanalteil (18;20,22) ausgebildeten Luftansaugkanälen (10,12),
einer in einem der Kanalteile (20,22) vorgesehenen Lufteinlaßöffnung und einer im anderen Kanalteil (18) vorgesehenen Luftauslaßöffnung (30,32), wobei zumindest eines der Kanalteile (20,22) zum Variieren der Länge des jeweiligen Luftansaugkanals (10,12) schwenkbar ist,
zwei Schwenkachsen (34,36), die jeweils mit mindestens einem schwenkbaren Kanalteil (20,22) verbunden sind, und
Schwenkachsenlagern (48) zur Aufnahme der Schwenkachsen (34,36),
**gekennzeichnet durch**
ein einstückiges, zwei Schwenkachsenlager (48) für je eine der beiden Schwenkachsen (34,36) umfassendes Lagerteil (44), wobei das Lagerteil (44) zwischen den beiden Schwenkachsen (48) eine gemeinsame Hülsenwand (56), die dünner als die doppelte Stärke der einzelnen bzw. außen liegenden Hülsenwände (58) ausgebildet ist, aufweist.

2. Luftansaugkanalsystem nach Anspruch 1, **dadurch gekennzeichnet, dass** die Schwenklager durch zwei Lagerhülsen (48) gebildet sind.

3. Luftansaugkanalsystem nach Anspruch 1 oder 2, **dadurch gekennzeichnet, dass** die gemeinsame Hülsenwand (56) im Wesentlichen die gleiche Stärke wie die einzelnen Hülsenwände (58) aufweist.

4. Luftansaugkanalsystem nach einem der Ansprüche 1-3, **dadurch gekennzeichnet, dass** das Lagerteil (44) im Querschnitt 8-förmig ist.

5. Luftansaugkanalsystem nach einem der Ansprüche 1-4, **dadurch gekennzeichnet, dass** das Lagerteil (44) in dem feststehenden Kanalteil (18) angeordnet ist.

6. Luftansaugkanalsystem nach einem der Ansprüche 1-5, **dadurch gekennzeichnet, dass** das Lagerteil (44) durch zumindest teilweises Umspritzen mit Kunststoff mit dem feststehenden Kanalteil (18) verbunden ist.

## Claims

1. Air intake duct system for internal combustion engines, comprising:
a plurality of air intake ducts (10,12) each formed by at least a first and a second duct portion (18;20,22),
an air inlet opening provided in one of the duct portions (20,22) and an air outlet opening (30,32) provided in the other duct portion (18), wherein at least one of the duct portions (20,22) is arranged to swivel to vary the length of the respective air intake duct (10,12),
two swivelling axes (34,36) each connected with at least one swivel-mounted duct portion (20,22), and
swivelling axis bearings (48) for accommodating the swivelling axes (34,36),
**characterized by**
an integral bearing part (44) comprising two swivelling axis bearings (48) each accommodating one of the two swivelling axes (34,36), wherein the bearing part (44) comprises, between the two swivelling axes (48), a common sleeve wall (56) whose thickness is smaller than twice the thickness of the individual and/or external sleeve walls (58).

2. Air intake duct system according to claim 1, **characterized in that** the swivelling axis bearings are formed by two bearing sleeves (48).

3. Air intake duct system according to claim 1 or 2, **characterized in that** the common sleeve wall (56) has essentially the same thickness as the individual sleeve walls (58).

4. Air intake duct system according to one of claims 1-3, **characterized in that** the bearing part (44) has a cross-section in the form of an "8".

5. Air intake duct system according to one of claims 1-4, **characterized in that** the bearing part (44) is arranged in the stationary duct portion (18).

6. Air intake duct system according to one of claims 1-5, **characterized in that** the bearing part (44) is connected with the stationary duct portion (18) by being at least partial covered with plastic material.

## Revendications

1. Système de tubulures d'aspiration d'air pour moteur à combustion interne comportant
plusieurs tubulures d'aspiration d'air (10, 12) réalisées par une première et une deuxième partie de tubulure (18 ; 20, 22),
une ouverture d'entrée d'air prévue dans l'une des parties de tubulures (20, 22) et une ouverture de sortie d'air (30, 32) prévue dans l'autre partie de tubulure (18), l'une au moins des parties de tubulures (20, 22) étant pivotante pour faire varier la longueur de la tubulure d'aspiration d'air (10, 12),
deux axes de pivotement (34, 36), qui sont reliés chacun à au moins une partie de tubulure (20, 22) pivotante, et
des paliers d'axes de pivotement (48) pour recevoir les axes de pivotement (34, 36),
**caractérisé par**
un organe de palier (44) d'un seul tenant, comprenant deux paliers d'axes de pivotement (48) chacun pour l'un des deux axes de pivotement (34, 36), l'organe de palier (44) comportant une paroi de coussinet (56) commune aux deux axes de pivotement (48), qui est plus mince que le double de l'épaisseur des parois de coussinets (58) individuelles ou extérieures.

2. Système de tubulures d'aspiration d'air selon la revendication 1, **caractérisé en ce que** les paliers pivotants sont réalisés par deux coussinets de paliers (48).

3. Système de tubulures d'aspiration d'air selon la revendication 1 ou 2, **caractérisé en ce que** la paroi de coussinet (56) commune présente sensiblement la même épaisseur que les parois de coussinets (58) individuelles.

4. Système de tubulures d'aspiration d'air selon l'une des revendications 1 à 3, **caractérisé en ce que** l'organe de palier (44) a une section transversale en forme de 8.

5. Système de tubulures d'aspiration d'air selon l'une des revendications 1 à 4, **caractérisé en ce que** l'organe de palier (44) est disposé dans une partie de tubulure (18) fixe.

6. Système de tubulures d'aspiration d'air selon l'une des revendications 1 à 5, **caractérisé en ce que** l'organe de palier (44) est relié à la partie de tubulure fixe (18) par enrobage au moins partiel avec de la matière plastique.
